(19) Europäisches Patentamt
European Patent Office
Office européen des brevets

(11) EP 2 371 899 B1

(12) **EUROPEAN PATENT SPECIFICATION**

(45) Date of publication and mention of the grant of the patent:
**12.08.2015 Bulletin 2015/33**

(21) Application number: **09834937.6**

(22) Date of filing: **24.12.2009**

(51) Int Cl.:
***C08L 27/06*** (2006.01) ***C08K 5/09*** (2006.01)
***C08L 29/04*** (2006.01)

(86) International application number:
**PCT/JP2009/071424**

(87) International publication number:
**WO 2010/074139 (01.07.2010 Gazette 2010/26)**

(54) **POLYVINYL CHLORIDE RESIN COMPOSITION AND MANUFACTURING METHOD THEREFOR**

POLYVINYLCHLORIDHARZZUSAMMENSETZUNG UND HERSTELLUNGSVERFAHREN DAFÜR

COMPOSITION DE RÉSINE DE CHLORURE DE POLYVINYLE ET SON PROCÉDÉ DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008 JP 2008332032**

(43) Date of publication of application:
**05.10.2011 Bulletin 2011/40**

(73) Proprietor: **Kuraray Co., Ltd.**
**Okayama 710-0801 (JP)**

(72) Inventors:
- **NAKAMAE, Masato**
**Kurashiki-shi**
**Okayama 713-8550 (JP)**
- **TSUBOI, Akira**
**Kurashiki-shi**
**Okayama 713-8550 (JP)**
- **KUSUDOU, Takeshi**
**Kurashiki-shi**
**Okayama 713-8550 (JP)**

(74) Representative: **Müller-Boré & Partner**
**Patentanwälte PartG mbB**
**Friedenheimer Brücke 21**
**80639 München (DE)**

(56) References cited:
**EP-A1- 2 058 342**
**WO-A1-2008/015739**
**WO-A1-2009/154176**
**WO-A1-2009/154178**
**WO-A1-2009/154179**
**WO-A1-2009/157401**
**JP-A- 2006 241 448**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a polyvinyl chloride resin composition that is preferably used in applications for foods, medical use, household goods, and the like. In particular, it relates to a polyvinyl chloride resin composition that is good in thermal stability, less colored, and easily melt processed.

Polyvinyl chloride resins are processed for shaping by blending a stabilizer of Ca-Zn base, Ba-Zn base, and the like therein, and are widely used as general molding materials and further as materials for products suitable for foods, medical use, and the like. However, since shaped articles obtained only by blending these stabilizers are poor in abilities to inhibit heat deterioration, they used to have disadvantages, such as impairing initial colorability of the shaped articles and having not sufficient thermal stability of the shaped articles. Therefore, as a means for improvement of these disadvantages, polyvinyl chloride resin compositions are proposed to which an antioxidant is added or a compound having a hydroxyl group is added.

Patent Document 1 (JP 50-92947A) discloses a method of adding calcium soap, zinc soap, polyol or a derivative thereof, and a neutral inorganic calcium salt to a chloride-containing resin. Patent Document 2 (JP 54-81359A) discloses a method of adding a water soluble polymer to a chloride-containing polymer. Patent Document 3 (JP 57-147552A) discloses a method of adding a condensation reaction product of dipentaerythritol and dicarboxylic acid, zinc oxide, zinc carbonate or fatty acid zinc, and hydrotalcite to a chloride-containing resin.

Patent Document 4 (JP 60-238345A) discloses a method of adding a saponified product of an ethylene-vinyl acetate copolymer, having an ethylene unit content of from 20 to 50% and having a degree of saponification of a vinyl acetate unit of 96% or more, and a hydrotalcite-based compound to a thermoplastic resin. Patent Document 5 (JP 1-178543A) discloses a method of adding metal soap and a saponified product of an ethylene-vinyl acetate copolymer that has an ethylene content of from 20 to 75 mol% and has a degree of saponification of a vinyl acetate portion of 50 mol% or more to a halogen-containing thermoplastic resin.

Patent Document 6 (JP 6-287387A) discloses a method of adding a metal salt of an organic acid and acetalized polyvinyl alcohol to a vinyl chloride-based resin. Patent Document 7 (JP 9-3286A) discloses a method of adding a partially saponified polyvinyl alcohol having a degree of saponification of from 70 to 95 mol%, having an average degree of polymerization of from 300 to 2000, and having a terminal mercapto group to a vinyl chloride-based resin. Patent Document 8 (JP 9-31281A) discloses a method of adding a zinc compound, hydrotalcites, a polyvinyl alcohol, and polymethyl methacrylate to a vinyl chloride-based resin.

Non-Patent Document 1 (Japanese Journal of Polymer Science and Technology Vol. 47, No. 3, p. 197 (1990)) discloses a method of adding zinc stearate-calcium stearate complex soap and a completely saponified polyvinyl alcohol having a degree of polymerization of 600 or more to a polyvinyl chloride. Non-Patent Document 2 (Japanese Journal of Polymer Science and Technology Vol. 47, No. 6, p. 509 (1990)) discloses a method of adding zinc stearate-calcium stearate complex soap and a partially saponified polyvinyl alcohol having a degree of polymerization of 500 and having a degree of saponification of 73.6 mol% to a polyvinyl chloride.

Non-Patent Document 3 (Japanese Journal of Polymer Science and Technology Vol. 50, No. 2, p. 65 (1993)) discloses a method of adding zinc stearate-calcium stearate complex soap and an ethylene-vinyl alcohol copolymer having an ethylene content of 29 mol% or more to a polyvinyl chloride. Non-Patent Document 4 (Polymers & Polymer Composites, Vol. 11, p. 649 (2003)) discloses a method of adding zinc stearate-calcium stearate complex soap, and a polyvinyl alcohol having a degree of polymerization of 500 and having a degree of saponification of 98.5 mol% or an ethylene-vinyl alcohol copolymer having an ethylene content of 29 mol% or more to a polyvinyl chloride.

Non-Patent Document 5 (Journal of the Adhesion Society of Japan Vol. 43, No. 2, p. 43 (2007)) discloses a method of adding a polyvinyl alcohol having a degree of polymerization of 500 and having a degree of saponification of 88 mol% or a polyvinyl alcohol having a degree of polymerization of 1700 and having a degree of saponification of 78 mol% or more, and polymethyl methacrylate to a polyvinyl chloride.

However, the polyvinyl chloride resin compositions described in Patent Documents 1 through 8 and Non-Patent Documents 1 through 5 have problems of not being sufficient in long term thermal stability and of being colored. In addition, polyvinyl chloride shaped articles after melt process used to have problems of rough surface and lack of transparency.

WO 2008/015739 A1 discloses a dispersion stabilizer for suspension polymerization of a vinyl-based compound, which comprises a polyvinyl alcohol-based resin comprising a 1, 2-diol component at a side chain and having a degree of saponification of 65 to 87% by mol.

Patent Document 1: JP 50-92947A
Patent Document 2: JP 54-81359A
Patent Document 3: JP 57-147552A
Patent Document 4: JP 60-238345A
Patent Document 5: JP 1-178543A

Patent Document 6: JP 6-287387A
Patent Document 7: JP 9-3286A
Patent Document 8: JP 9-31281A

Non-Patent Document 1: Japanese Journal of Polymer Science and Technology Vol. 47, No. 3, p. 197 (1990)
Non-Patent Document 2: Japanese Journal of Polymer Science and Technology Vol. 47, No. 6, p. 509 (1990)
Non-Patent Document 3: Japanese Journal of Polymer Science and Technology Vol. 50, No. 2, p. 65 (1993)
Non-Patent Document 4: Polymers & Polymer Composites, Vol. 11, p. 649 (2003)
Non-Patent Document 5: Journal of the Adhesion Society of Japan Vol. 43, No. 2, p. 43 (2007)

It is an object of the present invention to provide a polyvinyl chloride resin composition that is good in thermal stability, is less colored, and has less rough surface and shows little loss of transparency after melt process.

As a result of intensive studies, the present inventors have found that it is possible to keep sufficient thermal stability while being shaped and also make a shaped article thereof that is less colored and has less rough surface by blending specific amounts of a polyvinyl alcohol (hereinafter, may be abbreviated as a PVA) having specific structural units and a zinc compound to a polyvinyl chloride resin, and thus have come to complete the present invention.

That is, the present invention is a polyvinyl chloride resin composition comprising: from 0.04 to 5 parts by weight of a polyvinyl alcohol having structural units expressed by a formula (1); and from 0.01 to 5 parts by weight of a zinc compound, based on 100 parts by weight of a polyvinyl chloride resin.

[chem 1]

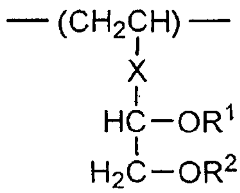

(1)

($R^1$ and $R^2$ independently denote a hydrogen atom, an alkyl group, or an acyl group, respectively. X denotes a single bond or an alkylene group having a carbon number of from 1 to 3 that may be mediated by an oxygen atom.)

At this time, it is preferred that the polyvinyl alcohol is obtained by saponifying a copolymer of a vinyl ester monomer and a compound expressed by a formula (2).

[chem 2]

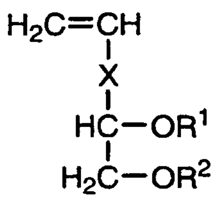

( 2 )

($R^1$, $R^2$, and X are same as the formula (1).)

As the compound expressed by the formula (2), it is preferred to be at least one type selected from the group consisting of 3,4-dihydroxy-1-butene, 3,4-dialkoxy-1-butene, 3,4-diacyloxy-1-butene, 4,5-dihydroxy-1-pentene, 4,5-dialkoxy-1-pentene, 4,5-diacyloxy-1-pentene, 5,6-dihydroxy-1-hexene, 5,6-dialkoxy-1-hexene, 5,6-diacyloxy-1-hexene, glycerin monoallyl ether, glycerin monovinyl ether, (2-hydroxy-3-alkoxy-propyl)allyl ether, and (2-hydroxy-3-alkoxy-propyl)vinyl ether.

It is also preferred that the polyvinyl alcohol has a viscosity average degree of polymerization of 800 or less and has a degree of saponification of 70 mol% or more. It is also preferred that the structural units expressed by the formula (1) in the polyvinyl alcohol are contained 10 mol% or less.

In addition, the present invention is a method of producing a polyvinyl chloride resin composition, comprising adding from 0.04 to 5 parts by weight of a polyvinyl alcohol having structural units expressed by the formula (1) and from 0.01 to 5 parts by weight of a zinc compound, based on 100 parts by weight of a polyvinyl chloride resin.

At this time, it is preferred that the polyvinyl alcohol is obtained by saponifying a copolymer of a vinyl ester monomer and a compound expressed by the formula (2).

As the compound expressed by the formula (2), it is preferred to be at least one type selected from the group consisting of 3,4-dihydroxy-1-butene, 3,4-dialkoxy-1-butene, 3,4-diacyloxy-1-butene, 4,5-dihydroxy-1-pentene, 4,5-dialkoxy-1-pentene, 4,5-diacyloxy-1-pentene, 5,6-dihydroxy-1-hexene, 5,6-dialkoxy-1-hexene, 5,6-diacyloxy-1-hexene, glycerin monoallyl ether, glycerin monovinyl ether, (2-hydroxy-3-alkoxy-propyl)allyl ether, and (2-hydroxy-3-alkoxy-propyl)vinyl ether.

The polyvinyl chloride resin composition of the present invention is characterized in that it is excellent in thermal stability and a shaped article thereof is less colored and has less rough surface, and the industrial value thereof is extremely high.

A polyvinyl chloride resin used in the present invention may be a homopolymer of vinyl chloride and may also be a copolymer of 50 weight% or more of vinyl chloride and a monomer that is copolymerizable therewith. The monomer copolymerized with vinyl chloride may include vinyl esters, such as vinyl acetate and vinyl propionate; (meth)acrylic esters, such as methyl acrylate and ethyl acrylate; olefins, such as ethylene and propylene; maleic anhydride; acrylonitrile; styrene; vinylidene chloride; and the like.

As a method of producing the polyvinyl chloride resin using these monomers, it is possible to preferably employ a method of suspension polymerizing the monomer in the presence of a polymerization initiator. In such a case, a normally used dispersion stabilizer is used that is, for example, a water soluble polymer, such as a water soluble cellulose ether, like methylcellulose, hydroxyethyl cellulose, hydroxypropyl cellulose, hydroxypropyl methylcellulose, or the like, a polyvinyl alcohol, or gelatin; an oil soluble emulsifier, such as sorbitan monolaurate, sorbitan trioleate, glycerin tristearate, and an ethylene oxide-propylene oxide block copolymer; a water soluble emulsifier, such as polyoxyethylene sorbitan monolaurate, polyoxyethylene glycerin oleate, or sodium laurate; and the like. Among them, a polyvinyl alcohol having a degree of saponification of from 65 to 99 mol% and having a degree of polymerization of from 500 to 4000 is preferably used. It is preferably added from 0.01 to 2.0 parts by weight based on 100 parts by weight of vinyl chloride. Although the dispersion stabilizer for suspension polymerization may be used singly, a polyvinyl alcohol having a degree of polymerization of from 100 to 4000 and having a degree of saponification of from 30 to 99 mol%, which is normally used in combination for suspension polymerizing a vinyl compound, such as vinyl chloride, in an aqueous medium, may also be used together. Although the amount thereof to be added is not particularly limited, it is preferred to be from 0.01 to 2.0 parts by weight based on 100 parts by weight of a vinyl compound, such as vinyl chloride.

As an initiator used for the polymerization, an oil soluble or water soluble polymerization initiator can be used that has been used for polymerization of vinyl chloride or the like conventionally. The oil soluble polymerization initiator may include, for example, percarbonate compounds, such as diisopropyl peroxydicarbonate, di-2-ethylhexyl peroxydicarbonate, and diethoxyethyl peroxydicarbonate; perester compounds, such as t-butyl peroxyneodecanoate, t-butyl peroxypivalate, t-hexyl peroxypivalate, and α-cumyl peroxyneodecanoate; peroxides, such as acetyl cyclohexyl sulfonyl peroxide, 2,4,4-trimethylpentyl-2-peroxyphenoxyacetate, 3,5,5-trimethyl hexanoyl peroxide, and lauroyl peroxide; azo compounds, such as azobis(2,4-dimethylvaleronitrile) and azobis(4-methoxy-2,4-dimethylvaleronitrile), and the like. The water soluble polymerization initiator may include, for example, potassium persulfate, ammonium persulfate, hydrogen peroxide, cumene hydroperoxide, and the like. These oil soluble or water soluble polymerization initiators can be used singly or in combination of two or more types.

Upon polymerization, it is possible to add various other additives to the polymerization reaction system as needed. The additives may include, for example, polymerization regulators, such as aldehydes, halogenated hydrocarbons, and mercaptans, polymerization inhibitors, such as a phenol compound, a sulfur compound, and an N-oxide compound, and the like. In addition, it is also possible to arbitrarily add a pH adjuster, a crosslinker, and the like.

Upon such polymerization, the polymerization temperature is not particularly limited. It can also be adjusted to a low temperature at approximately 20°C as well as a high temperature at over 90°C. It is also one of preferred embodiments to use a polymerization vessel with a reflux condenser to enhance the heat removal efficiency of the polymerization reaction system. For the polymerization, it is possible to arbitrarily use additives, such as normally used antiseptics, mildewcides, antiblocking agents, defoamers, antifouling agents, and antistatics, as needed.

The polyvinyl chloride resin composition of the present invention contains a PVA having structural units expressed by a formula (1). Thus, a polyvinyl chloride resin composition is excellent in thermal stability and a shaped article thereof is obtained that is less colored and has less rough surface.

[chem 3]

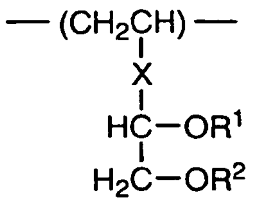

( 1 )

($R^1$ and $R^2$ independently denote a hydrogen atom, an alkyl group, or an acyl group, respectively. X denotes a single bond or an alkylene group having a carbon number of from 1 to 3 that may be mediated by an oxygen atom.)

The PVA used in the present invention preferably has a degree of saponification of from 70 to 99.9 mol%. The lower limit of the degree of saponification is more preferably 80 mol%. In a case of the degree of saponification of less than 70 mol%, there is a possibility of decreasing the long term thermal stability. The degree of saponification of the PVA is a value measured in accordance with JIS K6726.

The PVA preferably has a viscosity average degree of polymerization (hereinafter, may be referred to simply as a degree of polymerization) of 800 or less, more preferably 700 or less, even more preferably 600 or less, and particularly preferably 550 or less. When the viscosity average degree of polymerization is greater than 800, the long term thermal stability sometimes seriously decreases and the surface of a shaped article thereof sometimes becomes severely rough. The viscosity average degree of polymerization is preferably 100 or more from the perspective of production of the PVA, more preferably 150 or more, and even more preferably 200 or more.

The viscosity average degree of polymerization of the PVA is a value measured in accordance with JIS K6726. That is, it is a value obtained by the following expression using limiting viscosity [η] that is measured in water at 30°C after resaponifying the PVA to a degree of saponification of 99.5 mol% or more and purifying it.

$$P = ([\eta]\times 1000/8.29)^{(1/0.62)}$$

The PVA, used in the present invention, having structural units expressed by the formula (1) is obtained by saponifying a copolymer of a vinyl ester monomer and a compound expressed by a formula (2).

[chem 4]

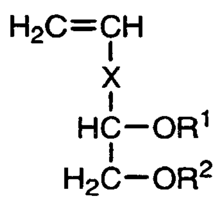

( 2 )

($R^1$, $R^2$, and X are same as the formula (1).)

The compound expressed by the formula (2) may include 3,4-dihydroxy-1-butene, 3,4-dialkoxy-1-butene, 3,4-diacyloxy-1-butene, 4,5-dihydroxy-1-pentene, 4,5-dialkoxy-1-pentene, 4,5-diacyloxy-1-pentene, 5,6-dihydroxy-1-hexene, 5,6-dialkoxy-1-hexene, 5,6-diacyloxy-1-hexene, glycerin monoallyl ether, glycerin monovinyl ether, (2-hydroxy-3-alkoxy-propyl) allyl ether, (2-hydroxy-3-alkoxy-propyl) vinyl ether, and the like. Among all, 3,4-diacyloxy-1-butene is preferred from the perspective of industrial productivity.

The PVA can be produced by copolymerizing a vinyl ester monomer and the compound expressed by the formula (2) by employing a conventionally known process, such as bulk polymerization, solution polymerization, suspension polymerization, emulsion polymerization, and dispersion polymerization, and saponifying the vinyl ester copolymer thus obtained. Polymerization processes preferred from the industrial perspective are solution polymerization, emulsion polymerization, and dispersion polymerization. For the polymerization operation, any polymerization system can be employed among batch process, semi-batch process, and continuous process. The vinyl ester monomer allowed to be used for the polymerization may include, for example, vinyl acetate, vinyl formate, vinyl propionate, vinyl caprylate, vinyl versatate, and the like. Among them, vinyl acetate is preferred from the industrial perspective.

Upon the polymerization, it is allowed to copolymerize the vinyl ester monomer with another monomer as long as not impairing the spirit of the present invention

The structural units expressed by the formula (1) are preferably contained in the PVA 10 mol% or less. They

are even more preferably contained 8 mol% or less. In addition, they are preferably contained 1 mol% or more. In a case that the structural units are contained less than 1 mol%, a melting point of the PVA is high, so that it becomes difficult in some cases to shape the polyvinyl chloride resin composition thus obtained at a temperature not causing thermal decomposition (normally, 210°C or less). When they are contained more than 10 mol%, the thermal stability during melt molding decreases in some cases. Introduction of the structural units expressed by the formula (1) in a predetermined amount into the PVA enables to decrease the melting point of the PVA and also to increase the amount of hydroxyl groups. This enables the polyvinyl chloride resin composition to be shaped near the melting point while maintaining good thermal stability, so that a shaped article is obtained that has less rough surface and is high in transparency.

Upon the polymerization of the vinyl ester monomer, for the purpose of adjustment of the degree of polymerization of the PVA thus obtained or the like, a chain transfer agent is allowed to coexist. The chain transfer agent may include aldehydes, such as acetaldehyde, propionaldehyde, butylaldehyde, and benzaldehyde; ketones, such as acetone, methyl ethyl ketone, hexanone, and cyclohexanone; mercaptans, such as 2-hydroxy ethanethiol; and halogenated hydrocarbons, such as trichloroethylene and perchloroethylene, and among all, aldehydes and ketones are used preferably. Although the amount of the chain transfer agent to be added is determined according to the chain transfer constant of the chain transfer agent to be added and the intended degree of polymerization of the PVA, it is generally desired to be from 0.1 to 10 weight% to the vinyl ester monomer.

In the present invention, it is also possible to use a PVA, having a high content of 1, 2-glycol bond in the main chain, that is obtained by polymerizing the vinyl ester monomer at a temperature condition higher than normal polymerization. In this case, the content of 1,2-glycol bond is preferably 1.9 mol% or more, more preferably 2.0 mol% or more, and even more preferably 2.1 mol% or more.

To the saponification reaction of the polyvinyl ester, an alcoholysis or hydrolysis reaction can be applied using conventionally known basic catalysts, such as sodium hydroxide, potassium hydroxide, and sodium methoxide, or acid catalysts, such as p-toluenesulfonic acid. The solvent used for the saponification reaction may include alcohols, such as methanol and ethanol; esters, such as methyl acetate and ethyl acetate; ketones, such as acetone and methyl ethyl ketone; and aromatic hydrocarbons, such as benzene and toluene, and they can be used singly or in combination of two or more types. Among all, it is preferred for the convenience to carry out a saponification reaction using methanol or a mixed solvent of methanol and methyl acetate in the presence of sodium hydroxide as the basic catalyst.

The content of the PVA in the polyvinyl chloride resin composition is from 0.04 to 5 parts by weight based on 100 parts by weight of the polyvinyl chloride resin, and preferably from 0.04 to 3 parts by weight. The long term thermal stability of the polyvinyl chloride resin composition thus obtained is not sufficient in a case of less than 0.04 parts by weight, and in a case of exceeding 5 parts by weight, it sometimes causes problems of coloring, rough surface, and the like in a shaped article made from the resin composition, and they are not preferred.

Upon production of the polyvinyl chloride resin composition of the present invention, a method of containing a PVA is not particularly limited. Although it may be added during polymerization of vinyl chloride, a method of containing it by adding a PVA to a polyvinyl chloride resin is preferred. This is because, since the PVA acts as a dispersion stabilizer in the method of adding the PVA during polymerization of vinyl chloride, it may influence, or sometimes may also adversely affect, the quality of the polyvinyl chloride resin thus obtained, such as the average particle diameter and the plasticizer absorbency. This is also because, since most of the PVA is removed by washing of the polyvinyl chloride resin after producing the resin in the method of adding the PVA during polymerization of vinyl chloride, the content of the PVA becomes less than 0.04 parts by weight based on 100 parts by weight of the polyvinyl chloride resin and thus the effect as a thermal stabilizer is not obtained. The PVA can be added in powder or by being dissolved in water or an organic solvent to the polyvinyl chloride resin. In a case of being added in powder, the effect as a thermal stabilizer is better when the particle size is smaller in some cases, and normally one having a particle size of from 12 to 200 mesh pass is used.

The polyvinyl chloride resin composition of the present invention may also contain an acid having pKa at 25°C of from 3.5 to 5.5 and/or a metal salt thereof. The type of the acid is not particularly limited, and the specific examples may include acetic acid (pKa of 4.76), propionic acid (pKa of 4.87), butyric acid (pKa of 4.63), octanoic acid (pKa of 4.89), adipic acid (pKa of 5.03), benzoic acid (pKa of 4.00), formic acid (pKa of 3.55), valeric acid (pKa of 4.63), heptanoic acid (pKa of 4.66), lactic acid (pKa of 3.66), phenylacetic acid (pKa of 4.10), isobutyric acid (pKa of 4.63), cyclohexanecarboxylic acid (pKa of 4.70), and the like. Particularly preferably used acids are acetic acid, propionic acid, and lactic acid. Metal salts of the acids above may also be contained. Although the type of the metal salt is not particularly limited, a salt of alkali metal, such as sodium or potassium, or a salt of alkaline earth metal, such as magnesium or calcium, is normally used.

The acid having pKa of from 3.5 to 5.5 and/or the metal salt thereof is preferably contained from 0.05 to 5 parts by weight based on 100 parts by weight of the PVA, more preferably from 0.1 to 3 parts by weight, and even more preferably from 0. 15 to 2 parts by weight. There is a possibility of decreasing the long term thermal stability in a case that the acid and/or a metal salt thereof is contained less than 0.05 parts by weight to the PVA, and in a case of exceeding 5 parts by weight, there is a possibility of coloring the polyvinyl chloride resin. The method of containing the acid and/or

a metal salt thereof in a predetermined amount is not particularly limited. It may include, for example, a method of adjusting the type, the amount, and the like of the alkali catalyst used for the saponification when producing the PVA, a method of adding or removing the acid and/or a metal salt thereof after producing the PVA.

The zinc compound used in the present invention may include zinc salts of an organic acid, such as aliphatic carboxylates of zinc, such as zinc stearate, zinc laurate, and zinc oleate, aromatic carboxylates of zinc, such as zinc benzoate and zinc p-tert butyl benzoate, an amino acid zinc salt, and a phosphate zinc salt; inorganic zinc salts, such as zinc oxide and zinc carbonate; and the like. The zinc compound is added from 0.01 to 5 parts by weight based on 100 parts by weight of the polyvinyl chloride resin, and preferably from 0.05 to 3 parts by weight. The long term thermal stability of the polyvinyl chloride resin composition thus obtained is not sufficient in a case that the amount to be added is less than 0.01 parts by weight and in a case that it exceeds 5 parts by weight, and thus they are not preferred. Upon producing the polyvinyl chloride resin composition of the present invention, the zinc compound can be contained by, after obtaining a polyvinyl chloride resin by a polymerization reaction, adding it to the polyvinyl chloride resin.

Together with the polyvinyl chloride resin composition of the present invention, it is possible to contain stabilizers, phenolic antioxidants, phosphorous antioxidants, light stabilizers, ultraviolet absorbers, antifog agents, antistatics, flame retardants, lubricants, modifiers, reinforcements, pigments, blowing agents, plasticizers, and the like that are normally used. To the polyvinyl chloride resin composition of the present invention, another resin may also be mixed as long as not impairing the mechanical properties.

As the stabilizer, well known ones can be used and they may specifically include organic metal salts, such as soap of alkaline earth metals, like calcium soap and barium soap, aluminum soap, and organic phosphoric acid metal salts; inorganic metal salts, such as metal oxide, metal hydroxide, metal carbonate, and inorganic complex metal salts, like zeolite; halogen oxy acid salts, such as barium chlorate, barium perchlorate, and sodium perchlorate; and non-metallic stabilizers, such as β-diketone, polyol, and epoxy compounds.

The plasticizer may include, for example, ester-based plasticizers, such as an ester of an acid, like phthalic acid, trimellitic acid, pyromellitic acid, adipic acid, sebacic acid, and azelaic acid, and a single linear or branched alkyl alcohol, or a mixture thereof, like n-propanol, isopropanol, n-butanol, isobutanol, tert-butanol, n-pentanol, isopentanol, tert-pentanol, n-hexanol, isohexanol, n-heptanol, isoheptanol, n-octanol, isooctanol, 2-ethylhexanol, n-nonanol, isononanol, n-decanol, isodecanol, lauryl alcohol, myristyl alcohol, palmityl alcohol, and stearyl alcohol, and an ester of butanediol and adipic acid; epoxy-based plasticizers, such as epoxidized soybean oil, epoxidized linseed oil, epoxidized castor oil, epoxidized linseed oil fatty acid butyl, octyl epoxy stearate, epoxy triglyceride, diisodecyl epoxy-hexahydrophthalate, or a low molecular weight reaction product of epichlorohydrin with bisphenol A; and phosphate-based plasticizers, such as tricresyl phosphate, trixylenyl phosphate, monobutyl dixylenyl phosphate, and trioctyl phosphate.

The phenolic antioxidant may be any of those used normally, and may include, for example, 2,6-ditertiary butyl-p-cresol, 2,6-diphenyl-4-octadecyloxyphenol, stearyl(3,5-ditertiary butyl-4-hydroxyphenyl)-propionate, distearyl(3,5-ditertiary butyl-4-hydroxybenzyl)phosphonate, thiodiethylene glycol bis[(3,5-ditertiary butyl-4-hydroxyphenyl)propionate], 1,6-hexamethylene bis[(3,5-ditertiary butyl-4-hydroxyphenyl)propionate], 1,6-hexamethylene bis[(3,5-ditertiary butyl-4-hydroxyphenyl)propionic acid amide], 4,4'-thiobis(6-tertiary butyl-m-cresol), 2,2'-methylene bis(4-methyl-6-tertiary butylphenol), 2,2'-ethylene bis(4-ethyl-6-tertiary butylphenol), bis[3,3-bis(4-hydroxy-3-tertiary butylphenyl)butyric acid]glycol ester, 2,2'-ethylidene bis(4,6-ditertiary butylphenol), 2,2'-ethylidene bis(4-secondary butyl-6-tertiary butylphenol), 1,1,3-tris(2-methyl-4-hydroxy-5-tertiary butylphenyl) butane, bis[2-tertiary butyl-4-methyl-6-(2-hydroxy-3-tertiary butyl-5-methylbenzyl)phenyl]terephthalate, 1,3,5-tris(3,5-ditertiary butyl-4-hydroxybenzyl)-2,4,6-trimethylbenzene, 1,3,5-tris[(3,5-ditertiary butyl-4-hydroxyphenyl)propionyloxyethyl]isocyanurate, tetrakis[methylene-3-(3,5-ditertiary butyl-4-hydroxyphenyl)propionate]methane, 2-tertiary butyl-4-methyl-6-(2-acryloyloxy-3-tertiary butyl-5-methylbenzyl)phenol, 3,9-bis[1,1-dimethyl-2-{(3-tertiary butyl-4-hydroxy-5-methylphenyl)propionyloxy}ethyl]-2,4,8,10 -tetraoxaspiro[5.5]undecane, and triethylene glycol bis[(3-tertiary butyl-4-hydroxy-5-methylphenyl)propionate]. The phenolic antioxidant is added preferably from 0.01 to 5 parts by weight based on 100 parts by weight of the polyvinyl chloride resin, and even more preferably from 0.1 to 3 parts by weight.

The phosphorous antioxidant may be any of those used normally, and may include, for example, trisnonylphenyl phosphite, tris(2,4-ditertiary butylphenyl)phosphite, tris[2-tertiary butyl-4-(3-tertiary butyl-4-hydroxy-5-methylphenylthio)-5-methylphenyl]phosphit e, tridecyl phosphite, octyl diphenyl phosphite, di(decyl) monophenyl phosphite, di(tridecyl)pentaerythritol diphosphite, distearyl pentaerythritol diphosphite, di(nonylphenyl)pentaerythritol diphosphite, bis(2,4-ditertiary butylphenyl)pentaerythritol diphosphite, bis(2,6-ditertiary butyl-4-methylphenyl)pentaerythritol diphosphite, bis(2,4,6-tritertiary butylphenyl)pentaerythritol diphosphite, tetra(tridecyl)isopropylidenediphenol diphosphite, tetra(tridecyl)-4,4'-n-butylidenebis(2-tertiary butyl-5-methylphenol)diphosphite, hexa(tridecyl)-1,1,3-tris(2-methyl-4-hydroxy-5-tertiary butylphenyl)butane triphosphite, tetrakis(2,4-ditertiary butylphenyl)biphenylene diphosphonite, 9,10-dihydro-9-oxa-10-phosphaphenanthrene-10-oxide, and 2,2'-methylenebis(4-methyl-6-tertiary butylphenyl)-2-ethylhexyl phosphite. The phosphorous antioxidant is added preferably from 0.001 to 5 parts by weight based on 100 parts by weight of the polyvinyl chloride resin, and even more preferably from 0.005 to 3 parts by weight.

The ultraviolet absorber may include, for example, 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl) benzotriazoles, such as 2-(2-hydroxy-5-tertiary octylphenyl)benzotriazole, 2-(2-hydroxy-3,5-ditertiary butylphenyl)-5-chlorobenzotriazole, 2-(2-hydroxy-3-tertiary butyl-5-methylphenyl)-5-chlorobenzotriazole, 2-(2-hydroxy-3,5-dicumylphenyl)benzotriazole, 2,2'-methylenebis(4-tertiary octyl-6-benzotriazolyl)phenol, and a polyethylene glycol ester of 2-(2-hydroxy-3-tertiary butyl-5-carboxyphenyl)benzotriazole; benzoates, such as phenyl salicylate, resorcinol monobenzoate, 2,4-ditertiary butylphenyl-3,5-ditertiary butyl-4-hydroxybenzoate, and hexadecyl-3,5-ditertiary butyl-4-hydroxybenzoate; substituted oxanilides, such as 2-ethyl-2'-ethoxyoxanilide, and 2-ethoxy-4'-dodecyloxanilide; and cyanoacrylates, such as ethyl-$\alpha$-cyano-$\beta$,$\beta$-diphenylacrylate and methyl-2-cyano-3-methyl-3-(p-methoxyphenyl)acrylate. The ultraviolet absorber is added preferably from 0.005 to 10 parts by weight based on 100 parts by weight of the polyvinyl chloride resin, and even more preferably from 0.01 to 5 parts by weight.

The light stabilizer may include, for example, hindered amine compounds, such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butanetetracarboxy late, tetrakis(1,2,2,6,6-pentamethyl-4-piperidyl)butanetetracarbo xylate, bis(1,2,2,6,6-pentamethyl-4-piperidyl)-di(tridecyl) -1,2,3,4-butanetetracarboxylate, bis(1,2,2,6,6-pentamethyl-4-hydroxybenzyl)malonate, a 1-(2-hydroxyethyl)-2,2,6,6-tetramethyl-4-piperidinol/diethy 1 succinate polycondensation product, a 1,6-bis(2,2,6,6-tetraethyl-4-piperidylamino)hexane/dibromoe thane polycondensation product, a 1,6-bis(2,2,6,6-tetramethyl-4-piperidylamino)hexane/2,4-dic hloro-6-morpholino-s-triazine polycondensation product, a 1,6-bis(2,2,6,6-tetramethyl-4-piperidylamino)hexane/2,4-dic hloro-6-tertiary octylamino-s-triazine polycondensation product, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperi dyl)amino)-s-triazine-6-ylamino]undecane, and 1,6,11-tris[2,4-bis(N-butyl-N-(1,2,2,6,6-pentamethyl-4-pipe ridyl)amino)-s-triazine-6-ylamino]undecane. The light stabilizer is added preferably from 0.001 to 5 parts by weight based on 100 parts by weight of the polyvinyl chloride resin, and even more preferably from 0.05 to 3 parts by weight.

The lubricants may include hydrocarbons, such as liquid paraffin, natural paraffin, micro wax, and polyethylene wax; fatty acids, such as stearic acid and lauric acid; fatty acid amides, such as stearic amide, palmitic amide, methylenebisstearoamide, and ethylenebisstearoamide; fatty acid esters of monoalcohol, such as butyl stearate; fatty acid esters of polyol, such as hydrogenated castor oil, ethylene glycol monostearate, and glycerin monostearate; alcohols, such as cetyl alcohol and stearyl alcohol. Among all, in a case of using a fatty acid ester of polyol, the effect of the present invention is sometimes exhibited even more. The lubricant is added preferably from 0.001 to 10 parts by weight based on 100 parts by weight of the polyvinyl chloride resin, and even more preferably from 0.05 to 5 parts by weight.

A method of processing the polyvinyl chloride resin composition of the present invention may include extrusion processing, calender processing, blow molding, press processing, powder molding, injection molding, and the like.

Examples

The present invention is described below by way of Examples further in detail. In Examples and Comparative Examples below, parts and % denote parts by weight and weight%, respectively, unless otherwise specified.

Example 1

(Production of Polyvinyl Chloride Resin)

A polyvinyl alcohol, having a degree of polymerization of 850 and having a degree of saponification of 72 mol%, in an amount equivalent to 600 ppm with respect to vinyl chloride was dissolved in 40 parts of deionized water to prepare a dispersion stabilizer. The dispersion stabilizer thus obtained was charged in a glass-lined autoclave on which an antifouling agent, NOXOL WSW (produced by CIRS) was applied so as to have a solid content of 0.3 g/$m^2$. Subsequently, 0.04 parts of a 70% toluene solution of diisopropyl peroxydicarbonate was charged in the glass-lined autoclave, and after removing oxygen by degassing until the pressure in the autoclave became 0. 0067 MPa, 30 parts of vinyl chloride was charged therein and the contents in the autoclave were raised in temperature to 57°C while being stirred to initiate polymerization. The pressure in the autoclave when initializing the polymerization was 0.83 MPa. After seven hours since the initiation of polymerization, the polymerization was terminated at the time of the pressure in the autoclave being 0.44 MPa, and unreacted vinyl chloride was removed, followed by taking the polymerization reaction product out to dry it at 65°C overnight, and thus a polyvinyl chloride resin (PVC) was obtained.

(Production of PVA having Structural Units expressed by Formula (1))

In a reaction vessel (6 L) provided with a reflux condenser, a dropping funnel, and an agitator, 1081 g of vinyl acetate (VAM), 2400 g of methanol (MeOH), and 137.98 g of 3,4-diacetoxy-1-butene (comonomer) were charged and inside the reaction vessel was purged with nitrogen by bubbling with nitrogen. The reaction vessel was initiated to be

raised in temperature, and while the internal temperature was kept at 60°C, 7.8 g of 2,2'-azobisisobutyronitrile (AIBN) was added in the reaction vessel together with 19 g of methanol to initiate polymerization. It was kept at 60°C during the polymerization, and at the time of the polymerization conversion of 70% (solid content concentration of 23.7%), 10.7 g of sorbic acid was added as a polymerization inhibitor together with 1000 g of methanol to terminate the polymerization. Subsequently, unreacted vinyl acetate monomers were removed under reduced pressure while sometimes adding methanol at 30°C under reduced pressure, and further an operation to be distilled away under reduced pressure by adding methanol was carried out for three times, and thus a methanol solution of a vinyl acetate copolymer (PVAc-1) was obtained.

A methanol solution of the vinyl acetate copolymer (PVAc-1), methanol, and distilled water were charged in a beaker, and the solution temperature was adjusted at 40°C. A methanol solution of sodium hydroxide with a concentration of 9 weight% was added thereto so as to make an alkali molar ratio (a ratio of the mole number of the sodium hydroxide with respect to the mole number of the vinyl acetate units in the vinyl acetate copolymer) to be 0.0065 to initiate a saponification reaction. The amounts of methanol and distilled water to be added were adjusted respectively so as to make the concentration of the vinyl acetate copolymer to be 50 weight% and to make the water content of the saponification reaction system to be 1.0 weight% during the saponification reaction. After adding sodium hydroxide, the gelled PVA was recovered and ground, and then one hour after adding sodium hydroxide, the PVA obtained was immersed in methyl acetate for neutralization. After the neutralization, the obtained PVA was dried at 60°C for one day to obtain a polyvinyl alcohol (PVA-1).

As the degree of polymerization and the degree of saponification of the PVA-1 were respectively measured in accordance with JIS K6726, the degree of polymerization was 300 and the degree of saponification was 81.2 mol%. The amount of 3,4-diacetoxy-1-butene introduced therein was calculated by measuring the 1H-NMR (internal standard: tetramethylsilane, solvent: DMSO-d6) and it was 6.0 mol%.

(Fabrication of Resin Composition Sheet)

To 100 parts by weight of the polyvinyl chloride resin, 1 part by weight of zinc stearate, 2 parts by weight of calcium stearate, and 0.4 parts by weight of PVA-1 (16 mesh pass) were mixed. This vinyl chloride resin composition was kneaded at 190°C for five minutes with a test roll to fabricate a sheet having a thickness of 0.45 mm.

(Sheet Surface Condition)

The sheet obtained from the test roll was visually observed on the surface and was evaluated in accordance with the following indices.

A: The surface is smooth and there is almost no roughness.
B: The surface is slightly rough.
C: The surface is severely rough.

(Thermal Stability Test)

The sheet obtained from the test roll was cut into 50 × 70 mm to make a test piece. The test piece was put into a gear oven, and the time period until it was completely blackened at a temperature of 180°C was measured as an index of the long term thermal stability.

(Colorability Test)

The sheet obtained from the test roll was cut into 45 × 30 mm, and several sheet pieces thus obtained were stacked and pressed at 185°C for five minutes to fabricate a test piece having a thickness of 5 mm, and the colorability was compared visually and determined in accordance with the following standards.

A: almost not colored
B: slightly colored
C: yellow-browned

Examples 3 through 4, Comparative Examples 1 through 3

In a same manner as Example 1 other than fabricating a resin composition sheet by modifying the amount of PVA-1 to be added in Example 1, the sheet surface condition was observed and the long term thermal stability and the colorability were evaluated. Evaluation results are shown in Table 1.

Examples 5 through 6, Comparative Examples 4 through 5

In a same manner as Example 1 other than fabricating a resin composition sheet by modifying the amount of zinc stearate to be added in Example 1, the sheet surface condition was observed and the long term thermal stability and the colorability were evaluated. Evaluation results are shown in Table 1.

Examples 7 through 11

In a same manner as Example 1 other than modifying the amounts of vinyl acetate, methanol, 3,4-diacetoxy-1-butene, and the like to be charged in the production method of Example 1, a vinyl acetate copolymer (PVAc-2 through PVAc-6) was obtained and it was saponified in the same manner to obtain a polyvinyl alcohol (PVA-2 through PVA-6). The production conditions and various properties are shown in Table 2. Using the PVA thus obtained, in the same manner as Example 1, the sheet surface condition was observed and the long term thermal stability and the colorability were evaluated. Evaluation results are shown in Table 1.

Comparative Example 6

In a same manner as Example 1 other than using an unmodified PVA (PVA-7: degree of polymerization of 300, degree of saponification of 80.0 mol%) instead of the PVA-1 in Example 1, the sheet surface condition was observed and the long term thermal stability and the colorability were evaluated.
Evaluation results are shown in Table 1.

[Table 1]

| | PVA | | Amount of Zinc Stearate to be Added (parts by weight) *1 | Sheet Surface Condition | Thermal Stability Test (Time Period to be Blackened, min) | Colorability Test |
|---|---|---|---|---|---|---|
| | Type | Amount to be Added (parts by weight) *1 | | | | |
| Example 1 | PVA-1 | 0.4 | 1.0 | A | 100 | A |
| Example 3 | PVA-1 | 2.5 | 1.0 | A | 100 | A |
| Example 4 | PVA-1 | 5.0 | 1.0 | A | 100 | B |
| Comparative Example 1 | PVA-1 | 0 | 1.0 | A | 40 | C |
| Comparative Example 2 | PVA-1 | 0.0025 | 1.0 | A | 40 | C |
| Comparative Example 3 | PVA-1 | 7.0 | 1.0 | C | 90 | C |
| Example 5 | PVA-1 | 0.4 | 0.01 | A | 70 | A |
| Example 6 | PVA-1 | 0.4 | 5.0 | A | 100 | A |
| Comparative Example 4 | PVA-1 | 0.4 | 0.0 | A | 20 | C |
| Comparative Example 5 | PVA-1 | 0.4 | 7.0 | A | 60 | B |
| Example 7 | PVA-2 | 0.4 | 1.0 | A | 90 | A |
| Example 8 | PVA-3 | 0.4 | 1.0 | A | 90 | A |
| Example 9 | PVA-4 | 0.4 | 1.0 | B | 70 | A |
| Example 10 | PVA-5 | 0.4 | 1.0 | A | 90 | A |
| Example 11 | PVA-6 | 0.4 | 1.0 | B | 100 | A |

(continued)

| | PVA | | Amount of Zinc Stearate to be Added (parts by weight) *1 | Sheet Surface Condition | Thermal Stability Test (Time Period to be Blackened, min) | Colorability Test |
|---|---|---|---|---|---|---|
| | Type | Amount to be Added (parts by weight) *1 | | | | |
| Comparative Example 6 | PVA-7 | 0.4 | 1.0 | B | 60 | B |
| *1: Amount to be added based on 100 parts by weight of the vinyl chloride resin | | | | | | |

[Table 2]

| Synthesis Examples | Polyvinyl Acetate (PVAc) | | | | | | | Saponification concentration conditions | | | Polyvinyl Alcohol (PVA) | | |
|---|---|---|---|---|---|---|---|---|---|---|---|---|---|
| | | VAM (g) | MeOH (g) | Comonomer (g) | AIBN (g) | Polymerization Time Period (hr) | Polymerization Conversion (%) | Saponification Concentration [1] (%) | Alkali Molar Ratio [2] | Water Content (%) | Degree of Saponification (mol%) | Degree of Polymerization | Content [3] (mol%) |
| PVA-1 | PVAc-1 | 1081 | 2419 | 137.98 | 7.8 | 6 | 70 | 50 | 0.0065 | 1.0 | 81.2 | 300 | 6.0 |
| PVA-2 | PVAc-2 | 1621 | 1879 | 206.96 | 5.6 | 4 | 65 | 40 | 0.0063 | 1.0 | 80.4 | 500 | 6.0 |
| PVA-3 | PVAc-3 | 2072 | 1428 | 264.48 | 5.2 | 4 | 60 | 35 | 0.0060 | 1.0 | 79.8 | 700 | 6.0 |
| PVA-4 | PVAc-4 | 2414 | 1086 | 308.16 | 4.2 | 4 | 50 | 30 | 0.0059 | 1.0 | 80.6 | 900 | 6.0 |
| PVA-5 | PVAc-5 | 1018 | 2482 | 62.98 | 5.1 | 6 | 70 | 50 | 0.0046 | 1.0 | 70.6 | 300 | 3.0 |
| PVA-6 | PVAc-6 | 1156 | 2344 | 228.64 | 9.5 | 6 | 70 | 50 | 0.0150 | 0.5 | 95.3 | 300 | 9.0 |

1) PVAc concentration during the saponification reaction (weight%)
2) Ratio of the mole number of sodium hydroxide with respect to the mole number of vinyl acetate units in the PVAc
3) Content of the structural units of formula (1) (mol%)

## Claims

1. A polyvinyl chloride resin composition comprising:

   from 0.04 to 5 parts by weight of a polyvinyl alcohol having structural units expressed by a formula (1); and from 0.01 to 5 parts by weight of a zinc compound, based on 100 parts by weight of a polyvinyl chloride resin

   [chem 1]

   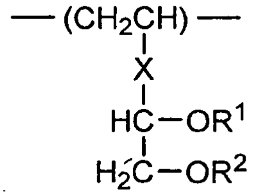

   (1)

   ($R^1$ and $R^2$ independently denote a hydrogen atom, an alkyl group, or an acyl group, respectively. X denotes a single bond or an alkylene group having a carbon number of from 1 to 3 that may be mediated by an oxygen atom.).

2. The polyvinyl chloride resin composition according to claim 1, wherein the polyvinyl alcohol is obtained by saponifying a copolymer of a vinyl ester monomer and a compound expressed by a formula (2)

   [chem 2]

   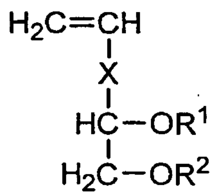

   (2)

   ($R^1$, $R^2$, and X are same as the formula (1).).

3. The polyvinyl chloride resin composition according to claim 2, wherein the compound expressed by the formula (2) is at least one type selected from the group consisting of 3,4-dihydroxy-1-butene, 3,4-dialkoxy-1-butene, 3,4-diacyloxy-1-butene, 4,5-dihydroxy-1-pentene, 4,5-dialkoxy-1-pentene, 4,5-diacyloxy-1-pentene, 5,6-dihydroxy-1-hexene, 5,6-dialkoxy-1-hexene, 5,6-diacyloxy-1-hexene, glycerin monoallyl ether, glycerin monovinyl ether, (2-hydroxy-3-alkoxy-propyl)allyl ether, and (2-hydroxy-3-alkoxy-propyl)vinyl ether.

4. The polyvinyl chloride resin composition according to any one of claims 1 through 3, wherein the polyvinyl alcohol has a viscosity average degree of polymerization of 800 or less and has a degree of saponification of 70 mol% or more.

5. The polyvinyl chloride resin composition according to any one of claims 1 through 4, wherein the structural units expressed by the formula (1) in the polyvinyl alcohol are contained 10 mol% or less.

6. A method of producing a polyvinyl chloride resin composition, comprising adding from 0.04 to 5 parts by weight of a polyvinyl alcohol having structural units expressed by a formula (1) and from 0.01 to 5 parts by weight of a zinc compound, based on 100 parts by weight of a polyvinyl chloride resin

[chem 3]

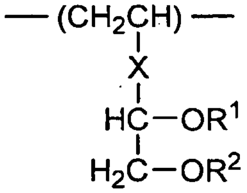

(1)

($R^1$ and $R^2$ independently denote a hydrogen atom, an alkyl group, or an acyl group, respectively. X denotes a single bond or an alkylene group having a carbon number of from 1 to 3 that may be mediated by an oxygen atom.).

**7.** The method of producing a polyvinyl chloride resin composition according to claim 6, wherein the polyvinyl alcohol is obtained by saponifying a copolymer of a vinyl ester monomer and a compound expressed by a formula (2)

[chem 4]

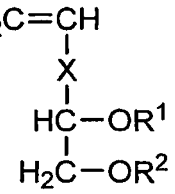

(2)

($R^1$, $R^2$, and X are same as the formula (1).).

**8.** The method of producing a polyvinyl chloride resin composition according to claim 7, wherein the compound expressed by the formula (2) is at least one type selected from the group consisting of 3,4-dihydroxy-1-butene, 3,4-dialkoxy-1-butene, 3,4-diacyloxy-1-butene, 4,5-dihydroxy-1-pentene, 4,5-dialkoxy-1-pentene, 4,5-diacyloxy-1-pentene, 5,6-dihydroxy-1-hexene, 5,6-dialkoxy-1-hexene, 5,6-diacyloxy-1-hexene, glycerin monoallyl ether, glycerin monovinyl ether, (2-hydroxy-3-alkoxy-propyl)allyl ether, and (2-hydroxy-3-alkoxy-propyl)vinyl ether.

## Patentansprüche

**1.** Polyvinylchloridharzzusammensetzung, umfassend:

0,04 bis 5 Gewichtsteile eines Polyvinylalkohols mit Struktureinheiten, die durch die Formel (1) dargestellt sind, und 0,01 bis 5 Gewichtsteile einer Zinkverbindung auf der Basis von 100 Gewichtsteilen eines Polyvinylchloridharzes

[Chem 1]

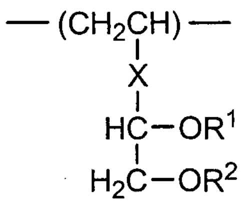

(1)

($R^1$ und $R^2$ stehen jeweils unabhängig für ein Wasserstoffatom, eine Alkylgruppe oder eine Acylgruppe. X steht für eine Einfachbindung oder eine Alkylengruppe mit einer Kohlenstoffanzahl von 1 bis 3, die ein Sauerstoffatom enthalten kann.).

**2.** Polyvinylchloridharzzusammensetzung nach Anspruch 1, bei welcher der Polyvinylalkohol durch Verseifen eines Copolymers aus einem Vinylestermonomer und einer Verbindung, die durch die Formel (2) dargestellt ist, erhalten

wird

[Chem 2]

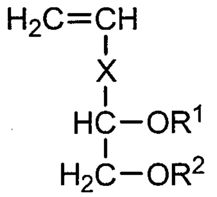

(2)

($R^1$, $R^2$ und X sind mit denjenigen in der Formel (1) identisch.).

3. Polyvinylchloridharzzusammensetzung nach Anspruch 2, bei der die Verbindung, die durch die Formel (2) dargestellt ist, mindestens ein Typ ist, der aus der Gruppe, bestehend aus 3,4-Dihydroxy-1-buten, 3,4-Dialkoxy-1-buten, 3,4-Diacyloxy-1-buten, 4,5-Dihydroxy-1-penten, 4,5-Dialkoxy-1-penten, 4,5-Diacyloxy-1-penten, 5,6-Dihydroxy-1-hexen, 5,6-Dialkoxy-1-hexen, 5,6-Diacyloxy-1-hexen, Glycerinmonoallylether, Glycerinmonovinylether, (2-Hydroxy-3-alkoxypropyl)allylether und (2-Hydroxy-3-alkoxypropyl)vinylether, ausgewählt ist.

4. Polyvinylchloridharzzusammensetzung nach einem der Ansprüche 1 bis 3, bei welcher der Polyvinylalkohol einen viskositätsgemittelten Polymerisationsgrad von 800 oder weniger aufweist und einen Verseifungsgrad von 70 mol-% oder mehr aufweist.

5. Polyvinylchloridharzzusammensetzung nach einem der Ansprüche 1 bis 4, bei welcher der Polyvinylalkohol 10 mol-% oder weniger der Struktureinheiten, die durch die Formel (1) dargestellt sind, enthält.

6. Verfahren zur Herstellung einer Polyvinylchloridharzzusammensetzung, umfassend das Zusetzen von 0,04 bis 5 Gewichtsteilen eines Polyvinylalkohols mit Struktureinheiten, die durch die Formel (1) dargestellt sind, und 0,01 bis 5 Gewichtsteilen einer Zinkverbindung auf der Basis von 100 Gewichtsteilen eines Polyvinylchloridharzes

[Chem 3]

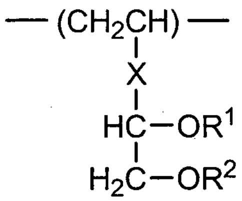

(1)

($R^1$ und $R^2$ stehen jeweils unabhängig für ein Wasserstoffatom, eine Alkylgruppe oder eine Acylgruppe. X steht für eine Einfachbindung oder eine Alkylengruppe mit einer Kohlenstoffanzahl von 1 bis 3, die ein Sauerstoffatom enthalten kann.).

7. Verfahren zur Herstellung einer Polyvinylchloridharzzusammensetzung nach Anspruch 6, bei dem der Polyvinylalkohol durch Verseifen eines Copolymers aus einem Vinylestermonomer und einer Verbindung, die durch die Formel (2) dargestellt ist, erhalten wird

[Chem 4]

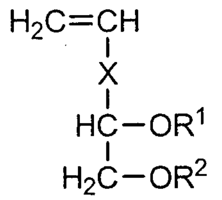

(2)

($R^1$, $R^2$ und X sind mit denjenigen in der Formel (1) identisch.).

**8.** Verfahren zur Herstellung einer Polyvinylchloridharzzusammensetzung nach Anspruch 7, bei dem die Verbindung, die durch die Formel (2) dargestellt ist, mindestens ein Typ ist, der aus der Gruppe, bestehend aus 3,4-Dihydroxy-1-buten, 3,4-Dialkoxy-1-buten, 3,4-Diacyloxy-1-buten, 4,5-Dihydroxy-1-penten, 4,5-Dialkoxy-1-penten, 4,5-Diacyloxy-1-penten, 5,6-Dihydroxy-1-hexen, 5,6-Dialkoxy-1-hexen, 5,6-Diacyloxy-1-hexen, Glycerinmonoallylether, Glycerinmo-novinylether, (2-Hydroxy-3-alkoxypropyl)allylether und (2-Hydroxy-3-alkoxypropyl)-vinylether, ausgewählt ist.

## Revendications

**1.** Composition de résine de chlorure de polyvinyle comprenant:

entre 0.04 et 5 parties en poids d'un alcool polyvinylique ayant des unités structurelles exprimées par la formule (1) ; et entre 0.01 et 5 parties en poids d'un composé du zinc, sur la base de 100 parties en poids d'une résine de chlorure de polyvinyle

[chem 1]

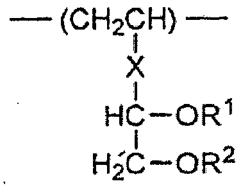

(1)

($R^1$ et $R^2$ désignent indépendamment un atome d'hydrogène, un groupe alkyle, ou un groupe acyle, respectivement. X désigne une liaison simple ou un groupe alkylène ayant un nombre de carbones entre 1 et 3 qui peuvent être séparé par un atome d'oxygène.)

**2.** Composition de résine de chlorure de polyvinyle selon la revendication 1, où l'alcool polyvinylique est obtenu par saponification d'un copolymère d'un monomère d'ester vinylique et d'un composé exprimé par la formule (2)

[chem 2]

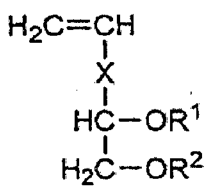

(2)

($R^1$ et $R^2$, et X sont tels que désignés dans la formule (1).)

**3.** Composition de résine de chlorure de polyvinyle selon la revendication 2, où le composé exprimé par la formule (2) est au moins un type sélectionné parmi le groupe consistant en le 3,4-dihydroxy-1-butène, le 3,4-dialcoxy-1-butène, le 3,4-diacyloxy-1-butène, le 4,5-dihydroxy-1-pentène, le 4,5-dialcoxy-1-pentène, le 4,5-diacyloxy-1-pentène, le 5,6-dihydroxy-1-hexène, le 5,6-dialcoxy-1-hexène, le 5,6-diacyloxy-1-hexène, l'éther monoallylique de glycérine, l'éther

monovinylique de glycérine, le (2-hydroxy-3-alcoxy-propyl) éther d'allyle, et le (2-hydroxy-3-alcoxy-propyl) éther vinylique.

4. Composition de résine de chlorure de polyvinyle selon l'une quelconque des revendications 1 à 3, où l'alcool polyvinylique a un degré moyen de viscosité de polymérisation de 800 ou moins et a un degré de saponification de 70 mol% ou plus.

5. Composition de résine de chlorure de polyvinyle selon l'une quelconque des revendications 1 à 4, où les unités structurelles exprimées par la formule (1) dans l'alcool polyvinylique sont contenues à 10 mol % ou moins.

6. Méthode de production d'une composition de résine de chlorure de polyvinyle, comprenant l'addition entre 0.04 et 5 parties en poids d'un alcool polyvinylique ayant des unités structurelles exprimées par la formule (1) ; et entre 0.01 et 5 parties en poids d'un composé du zinc, sur la base de 100 parties en poids d'une résine de chlorure de polyvinyle

[chem 3]

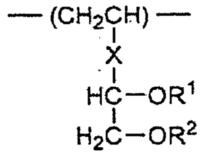

(1)

($R^1$ et $R^2$ désignent indépendamment un atome d'hydrogène, un groupe alkyle, ou un groupe acyle, respectivement. X désigne une liaison simple ou un groupe alkylène ayant un nombre de carbones entre 1 et 3 qui peuvent être séparé par un atome d'oxygène.)

7. Méthode de production d'une composition de résine de chlorure de polyvinyle selon la revendication 6, où l'alcool polyvinylique est obtenu par saponification d'un copolymère d'un monomère d'ester vinylique et d'un composé exprimé par la formule (2)

[chem 4]

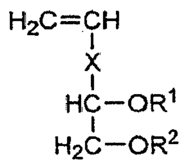

(2)

($R^1$ et $R^2$, et X sont tels que désignés dans la formule (1).)

8. Méthode de production d'une composition de résine de chlorure de polyvinyle selon la revendication 7, où le composé exprimé par la formule (2) est au moins un type sélectionné parmi le groupe consistant en le 3,4-dihydroxy-1-butène, le 3,4-dialcoxy-1-butène, le 3,4-diacyloxy-1-butène, le 4,5-dihydroxy-1-pentène, le 4,5-dialcoxy-1-pentène, le 4,5-diacyloxy-1-pentène, le 5,6-dihydroxy-1-hexène, le 5,6-dialcoxy-1-hexène, le 5,6-diacyloxy-1-hexène, l'éther monoallylique de glycérine, l'éther monovinylique de glycérine, le (2-hydroxy-3-alcoxy-propyl) éther d'allyle, et le (2-hydroxy-3-alcoxy-propyl) éther vinylique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 50092947 A
- JP 54081359 A
- JP 57147552 A
- JP 60238345 A
- JP 1178543 A
- JP 6287387 A
- JP 9003286 A
- JP 9031281 A
- WO 2008015739 A1


### Non-patent literature cited in the description


- *Japanese Journal of Polymer Science and Technology,* 1990, vol. 47 (3), 197
- *Japanese Journal of Polymer Science and Technology,* 1990, vol. 47 (6), 509
- *Japanese Journal of Polymer Science and Technology,* 1993, vol. 50 (2), 65
- *Polymers & Polymer Composites,* 2003, vol. 11, 649
- *Journal of the Adhesion Society of Japan,* 2007, vol. 43 (2), 43